# EUROPEAN PATENT SPECIFICATION

(11) **EP 3 305 835 B1**
(45) Date of publication and mention of the grant of the patent: **17.06.2020**
(21) Application number: 16803625.9
(22) Date of filing: 13.05.2016
(51) Int. Cl.: C08J 5/24, C08J 5/04, D03D 13/00, D03D 15/00

(54) **0° UNIDIRECTIONAL YARN PREPREG, METHOD FOR PRODUCING SAME, AND METHOD FOR PRODUCING MULTIAXIAL PREPREG COMPOSITE MATERIAL USING SAME**
PREPREG MIT 0° UNIDIREKTIONALEM GARN, VERFAHREN ZUR HERSTELLUNG DAVON UND VERFAHREN ZUR HERSTELLUNG EINES MEHRACHSIGEN PREPREG-VERBUNDMATERIALS DAMIT
FIL UNIDIRECTIONNEL 0° PRÉ-IMPRÉGNÉ, PROCÉDÉ DE FABRICATION DE CELUI-CI, ET PROCÉDÉ DE PRODUCTION D'UN MATÉRIAU COMPOSITE PRÉ-IMPRÉGNÉ MULTIAXIAL ASSOCIÉ

(30) Priority: 01.06.2015 KR 20150077258
(43) Date of publication of application: 11.04.2018
(73) Proprietor: Kolon Industries, Inc., Seoul 07793 (KR)
(72) Inventor: YOON, Joon Young, Yongin-si Gyeonggi-do 16910 (KR); LEE, Hyun Chul, Gangseo-gu Seoul 07793 (KR); CHO, Eun Jeong, Yongin-si Gyeonggi-do 16910 (KR)
(74) Representative: Ter Meer Steinmeister & Partner
(86) International application number: PCT/KR2016/005059
(87) International publication number: WO 2016/195270

(56) References cited:
- EP-A1- 1 342 544
- GB-A- 2 471 319
- JP-A- H0 782 611
- JP-A- H09 262 831
- JP-A- S62 158 727
- JP-A- 2011 121 372
- KR-A- 890 701 978
- KR-A- 20010 040 233
- US-A1- 2013 164 473

## Description

### [Technical Field]

The present invention relates to a 0° unidirectional yarn prepreg, a method for producing the same, and a method for producing a multiaxial prepreg composite material using the same.

More specifically, the present invention relates to a unidirectional yarn prepreg in which high-strength filaments are arranged in parallel to each other in an axial direction X of a winding roller around which unidirectional yarn prepregs are wound and a resin is impregnated (hereinafter referred to as a "0° unidirectional yarn prepreg"), and a method for continuously preparing the same.

Further, the present invention relates to a method for producing a composite material in which two unidirectional yarn prepregs having different arrangement directions of high-strength filaments from each other are laminated (hereinafter referred to as a "multiaxial prepreg composite material), which includes the steps of: simultaneously and continuously supplying (i) the 0° unidirectional yarn prepreg prepared as described above, and (ii) a unidirectional yarn prepreg prepared by a conventional warping method, in which high-strength filaments are arranged in parallel to each other in a direction Y perpendicular to an axial direction X of a winding roller around which unidirectional yarn prepregs are wound and a resin is impregnated (hereinafter referred to as a "90° unidirectional yarn prepreg") to a thermal compression roller; and performing thermal compression thereon.

### [Background Art]

As a conventional method for preparing a unidirectional yarn prepreg in which high-strength filaments are arranged in one direction and a resin is impregnated, a method, in which high-strength filaments are arranged in parallel to each other in a winding direction using a warping machine, and a resin is impregnated therein, followed by wining on a winding roller 1, has been used in the art.

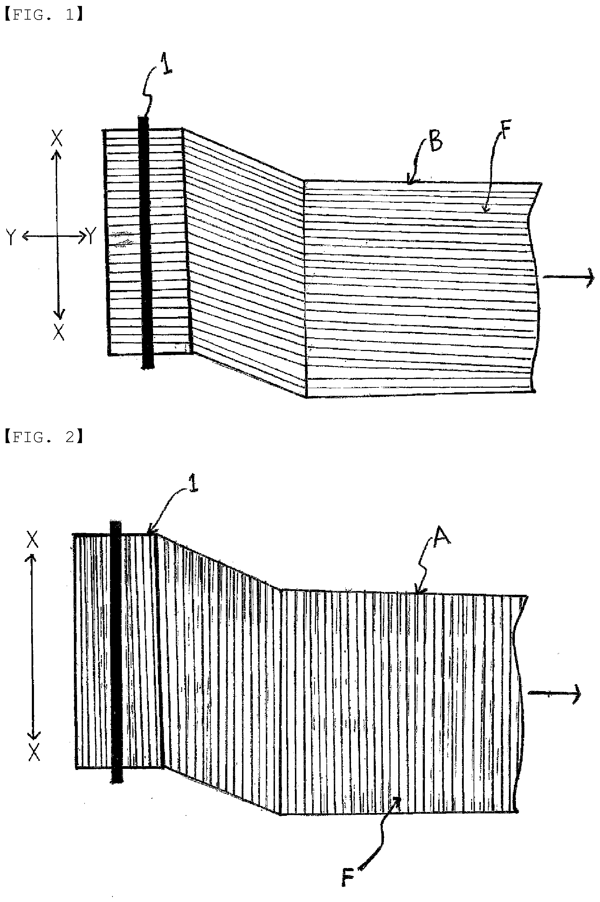

However, the above-described conventional method has a problem that only a 90° unidirectional yarn prepreg B, in which high-strength filaments are arranged in parallel to each other in a direction Y perpendicular to an axial direction X of a winding roller around which unidirectional yarn prepregs are wound as illustrated in FIG. 1, can be continuously prepared in a roll form, whereas a 0° unidirectional yarn prepreg A, in which high-strength filaments are arranged in parallel to each other in the axial direction X of the winding roller around which the unidirectional yarn prepregs are wound as illustrated in FIG. 2, cannot be continuously prepared in a roll form.

Meanwhile, there is also a problem in the art that, in order to produce a multiaxial prepreg composite material C by using only the 90° unidirectional yarn prepreg B prepared by the conventional method, in which (i) two or more unidirectional yarn prepregs are laminated, and (ii) one unidirectional yarn prepreg of two unidirectional yarn prepregs laminated adjacent to each other includes high-strength filaments whose orientation direction forms an inclination angle of 90° with respect to the orientation direction of the high-strength filaments included in the other unidirectional yarn prepreg, a cut part of the 90° unidirectional yarn prepreg B, which is cut in the same length as a width of the 90° unidirectional yarn prepreg B in a length direction of the 90° unidirectional yarn prepreg B, should be laminated on the 90° unidirectional yarn prepreg B illustrated in FIG. 1 by rotating it 90 degrees, and then should be perform thermal compression thereon, such that a process of producing the multiaxial prepreg composite material C is complicated, and the multiaxial prepreg composite material C could not be produced by a continuous process.

### [Disclosure]

### [Technical Problem]

It is an object of the present invention to provide a 0° unidirectional yarn prepreg in which high-strength filaments are arranged in parallel to each other in an axial direction X of a winding roller around which unidirectional yarn prepregs are wound and a resin is impregnated, and a method capable of continuously preparing the same in a roll form by a simple process.

Another object of the present invention is to provide a method capable of continuously producing a multiaxial prepreg composite material C in which the 0° unidirectional yarn prepreg A and a 90° unidirectional yarn prepreg B are laminated in a roll form.

### [Technical Solution]

In order to achieve the above objects, the present invention prepares a 0° unidirectional yarn prepreg, in which high-strength filaments are arranged in parallel to each other in an axial direction X of a winding roller around which unidirectional yarn prepregs are wound and a resin is impregnated, by using the steps of: (i) weaving a fabric using a thermoplastic film tape having a width of 5 to 60 mm as a warp and using high-strength filaments as wefts; and (ii) performing thermal compression on the woven fabric at a temperature in which the warp is melted.

Meanwhile, the present invention produces a multiaxial prepreg composite material having a structure in which (i) two or more unidirectional yarn prepregs are laminated, and (ii) one unidirectional yarn prepreg of two unidirectional yarn prepregs laminated adjacent to each other includes high-strength filaments whose orientation direction forms an inclination angle of 90° with respect to the orientation direction of the high-strength filaments included in the other unidirectional yarn prepreg, by using the steps of: simultaneously and continuously supplying the 0° unidirectional yarn prepreg A prepared as described above and a 90° unidirectional yarn prepreg B prepared by the conventional warping method to a thermal compression roller 2, and performing thermal compression thereon.

### [Advantageous Effects]

According to the present invention, a 0° unidirectional yarn prepreg, in which high-strength filaments are arranged in parallel to each other in an axial direction X of the winding roller around which unidirectional yarn prepregs are wound and a resin is impregnated, may be continuously prepared in a roll form.

According to the present invention, it is possible to continuously produce a multiaxial prepreg composite material C in which (i) two or more unidirectional yarn prepregs are laminated, and (ii) one unidirectional yarn prepreg of two unidirectional yarn prepregs laminated adjacent to each other includes high-strength filaments whose orientation direction forms an inclination angle of 90° with respect to the orientation direction of the high-strength filaments included in the other unidirectional yarn prepreg through a simpler process, thereby improving productivity and reducing manufacturing costs.

### [Description of Drawings]

FIG. 1 is a schematic view illustrating a state in which a 90° unidirectional yarn prepreg B prepared by a conventional method is unwound from a winding roller 1.
FIG. 2 is a schematic view illustrating a state in which a 0° unidirectional yarn prepreg A prepared by the present invention is unwound from the winding roller 1.
FIG. 3 is a schematic view of a process for producing a multiaxial prepreg composite material C.

### [Best Mode]

Hereinafter, the present invention will be described in detail with reference to the accompanying drawings.

The present invention prepares a 0° unidirectional yarn prepreg A, in which high-strength filaments are arranged in parallel to each other in an axial direction X of a winding roller around which unidirectional yarn prepregs are wound and a resin is impregnated, by using the steps of: (i) weaving a fabric using a thermoplastic film tape having a width of 5 to 60 mm as a warp and using high-strength filaments as wefts; and (ii) performing thermal compression on the woven fabric at a temperature in which the warp is melted.

The high-strength filaments are aramid filaments, or carbon fiber filaments. When weaving the fabric, the aramid filaments or the carbon fiber filaments are in a form in which the high-strength filaments different from each other are alternately arranged.

As the thermoplastic film tape, a polypropylene film tape, a polyethylene film tape, a polyimide film tape, a polyester film tape, a polyether ether ketone (PEEK) film tape, a polyurethane film tape, or the like is used. In the present invention, the thermoplastic film tape is not particularly limited in terms of a type.

The 0° unidirectional yarn prepreg prepared according to the present invention is free from the problem that a strength of the prepreg is weakened since there is no intersection of the warp and the wefts in comparison with the conventional prepreg.

According to the present invention, it is possible to continuously prepare the 0° unidirectional yarn prepreg A in a roll form, which cannot be prepared by a continuous process in the conventional method.

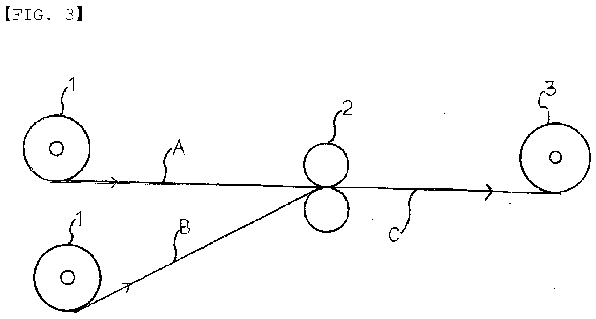

Meanwhile, in the present invention, the 0° unidirectional yarn prepreg A of FIG. 2 which is prepared as described above; and the 90° unidirectional yarn prepreg B of FIG. 1 which is prepared by the conventional warping method are simultaneously and continuously supplied to a thermal compression roller 2 as illustrated in FIG. 3, then thermal compression was performed thereon, to produce the multiaxial prepreg composite material C.

The multiaxial prepreg composite material C has a structure in which (i) two or more unidirectional yarn prepregs are laminated, and (ii) one unidirectional yarn prepreg of two unidirectional yarn prepregs laminated adjacent to each other includes high-strength filaments whose orientation direction forms an inclination angle of 90° with respect to the orientation direction of the high-strength filaments included in the other unidirectional yarn prepreg.

According to the present invention, it is possible to continuously produce the multiaxial prepreg composite material C in a roll form through a simpler process.

Hereinafter, the present invention will be described in more detail with reference to examples and a comparative example.

The following examples are proposed as preferred embodiments of the present invention, and it is duly not construed that the scope of the present invention is particularly limited to these examples.

### Example 1

A fabric having a plain-woven texture was woven using a polypropylene film tape having a density of 0.9 as a warp and using aramid filaments as wefts, then the woven fabric was subjected to thermal compression at 140°C to melt the polypropylene film tape, thereby, as illustrated in FIG. 2, a 0° unidirectional yarn prepreg A, in which the aramid filaments are arranged in parallel to each other in an axial direction X of a winding roller, was prepared in a roll form.

Next, the 0° unidirectional yarn prepreg A prepared as described above and the 90° unidirectional yarn prepreg B prepared by a conventional warping method in such a way the aramid filaments are arranged in parallel to each other in a direction Y perpendicular to the axial direction X of the winding roller were simultaneously and continuously supplied to a thermal compression roller 2 as illustrated in FIG. 3, then thermal compression was performed thereon, to continuously produce a multiaxial prepreg composite material C in a roll form.

### Example 2

A fabric having a plain-woven texture was woven using a polypropylene film tape as a warp and using carbon fiber filaments as wefts, then the woven fabric was subjected to thermal compression at 200°C to melt the polypropylene film tape, thereby, as illustrated in FIG. 2, a 0° unidirectional yarn prepreg A, in which the carbon fiber filaments are arranged in parallel to each other in an axial direction X of a winding roller, was prepared in a roll form.

Next, the 0° unidirectional yarn prepreg A prepared as described above and the 90° unidirectional yarn prepreg B prepared by a conventional warping method in such a way the carbon fiber filaments are arranged in parallel to each other in a direction Y perpendicular to the axial direction X of the winding roller were simultaneously and continuously supplied to a thermal compression roller 2 as illustrated in FIG. 3, then thermal compression was performed thereon, to continuously produce a multiaxial prepreg composite material C in a roll form.

### Example 3

A fabric having a plain-woven texture was woven using a polypropylene film tape as a warp and using aramid filaments and carbon fiber filaments in a ratio of 2:2 as wefts, then the woven fabric was subjected to thermal compression at 140°C to melt the polypropylene film tape, thereby, as illustrated in FIG. 2, a 0° unidirectional yarn prepreg A, in which the wefts are arranged in parallel to each other in an axial direction X of a winding roller, was prepared in a roll form.

Next, the 0° unidirectional yarn prepreg A prepared as described above and the 90° unidirectional yarn prepreg B prepared by a conventional warping method in such a way the aramid filaments and carbon fiber filaments are arranged in parallel to each other in a direction Y perpendicular to the axial direction X of the winding roller were simultaneously and continuously supplied to a thermal compression roller 2 as illustrated in FIG. 3, then thermal compression was performed thereon, to continuously produce a multiaxial prepreg composite material C in a roll form.

### Comparative Example 1

As illustrated in FIG. 1, a 90° unidirectional yarn prepreg B, in which aramid filaments are arranged in parallel to each other in a direction Y perpendicular to an axial direction X of a winding roller, was continuously prepared in a roll form by a conventional warping method.

Next, the 90° unidirectional yarn prepreg B was cut in the same length as a width of the 90° unidirectional yarn prepreg B, and the cut part was rotated 90 degrees, then the cut part was laminated on another 90° unidirectional yarn prepreg B, followed by performing thermal compression thereon, to continuously produce a multiaxial prepreg composite material C in a roll form.

In Examples 1 to 3, the 0° unidirectional yarn prepreg A was continuously prepared in a roll form, then was continuously laminated with the 90° unidirectional yarn prepreg B prepared by the conventional warping method in a roll form, followed by performing thermal compression thereon, such that the multiaxial prepreg composite material C could be continuously produced, but in Comparative Example 1, the above-described continuous production process was impossible.

### [Description of Reference Numerals]

1: Winding roller with unidirectional yarn prepreg wound thereon
A: 0° unidirectional yarn prepreg
B: 90° unidirectional yarn prepreg
X: Axial direction of winding roller 1
Y: Direction perpendicular to axial direction of winding roller 1
2: Thermal compression roller
C: Multiaxial prepreg composite material
3: Winding roller for multiaxial prepreg composite material
F: High-strength filament

### [Industrial Applicability]

The 0° unidirectional yarn prepreg according to the present invention may be used as a material for producing a multiaxial prepreg composite material, a material for manufacturing a helmet, a material for manufacturing a golf shaft, a material for manufacturing an impact beam for an automobile door and the like.

The multiaxial prepreg composite material according to the present invention may be used as a material for manufacturing a helmet, a material for manufacturing a golf shaft, a material for manufacturing an impact beam for an automobile door and the like.

## Claims

1. A method for producing a 0° unidirectional yarn prepreg, in which high-strength filaments are arranged in parallel to each other in an axial direction X of a winding roller around which unidirectional yarn prepregs are wound and a resin is impregnated, the method comprising the steps of:
(i) weaving a fabric using a thermoplastic film tape having a width of 5 to 60 mm as a warp and using high-strength filaments as wefts; and
(ii) performing thermal compression on the woven fabric at a temperature in which the warp is melted,
wherein the high-strength filament is one selected from a group consisting of aramid filaments and carbon fiber filaments,
wherein the wefts included in the fabric have a form in which the high-strength filaments different from each other are alternately arranged, and
wherein the thermoplastic film tape is one selected from a group consisting of a polypropylene film tape, a polyethylene film tape, a polyimide film tape, a polyester film tape, a polyether ether ketone (PEEK) film tape and a polyurethane film tape.

2. A method for producing a multiaxial prepreg composite material having a structure, in which (i) two or more unidirectional yarn prepregs are laminated, and (ii) one unidirectional yarn prepreg of two unidirectional yarn prepregs laminated adjacent to each other includes high-strength filaments whose orientation direction forms an inclination angle of 90° with respect to the orientation direction of the high-strength filaments included in the other unidirectional yarn prepreg, the method comprising the steps of:
simultaneously and continuously supplying a 0° unidirectional yarn prepreg A produced by the method according to claim 1; and a 90° unidirectional yarn prepreg B in which high-strength filaments F are arranged in parallel to each other in a direction Y perpendicular to the axial direction X of the winding roller around which the unidirectional yarn prepregs are wound to a thermal compression roller 2; and
performing thermal compression thereon,
wherein the high-strength filament is one selected from a group consisting of aramid filaments and carbon fiber filaments,
wherein the wefts included in the fabric have a form in which the high-strength filaments different from each other are alternately arranged, and
wherein the thermoplastic film tape is one selected from a group consisting of a polypropylene film tape, a polyethylene film tape, a polyimide film tape, a polyester film tape, a polyether ether ketone (PEEK) film tape and a polyurethane film tape.

3. The method according to claim 2, wherein the 90° unidirectional yarn prepreg B is prepared by a warping method using a warping machine.

## Patentansprüche

1. Verfahren zur Herstellung eines 0°-unidirektionalen Garn-Prepregs, bei dem hochfeste Filamente parallel zueinander in einer axialen Richtung X einer Wickelrolle angeordnet werden, um die unidirektionale Garn-Prepregs gewickelt werden und die mit einem Harz imprägniert werden, wobei das Verfahren die folgenden Schritte umfasst:
(i) Weben eines Gewebes unter Verwendung eines thermoplastischen Filmbandes mit einer Breite von 5 bis 60 mm als Kette und unter Verwendung hochfester Filamente als Schüsse; und
(ii) Durchführen thermischer Kompression des Gewebes bei einer Temperatur, bei der die Kette geschmolzen wird,
wobei das hochfeste Filament eines ist, das aus einer Gruppe ausgewählt ist, bestehend aus Aramidfilamenten und Kohlefaserfilamenten,
wobei die in dem Gewebe eingeschlossenen Schüsse eine Form haben, in der die hochfesten Filamente, die sich voneinander unterscheiden, abwechselnd angeordnet sind, und
wobei das thermoplastische Filmband eines ist, das aus einer Gruppe ausgewählt ist, bestehend aus einem Polypropylenfilmband, einem Polyethylenfilmband, einem Polyimidfilmband, einem Polyesterfilmband, einem Polyetheretherketon(PEEK)-Filmband und einem Polyurethanfilmband.

2. Verfahren zur Herstellung eines multiaxialen Prepreg-Verbundmaterials mit einer Struktur, bei der (i) zwei oder mehr unidirektionale Garn-Prepregs laminiert werden und (ii) ein unidirektionales Garn-Prepreg aus zwei unidirektionalen Garn-Prepregs, die nebeneinander laminiert sind, hochfeste Filamente enthält, deren Orientierungsrichtung einen Neigungswinkel von 90° in Bezug auf die Orientierungsrichtung der hochfesten Filamente bildet, die in dem anderen unidirektionalen Garn-Prepreg enthalten sind, wobei das Verfahren die folgenden Schritte umfasst:
gleichzeitiges und kontinuierliches Zuführen eines 0°-unidirektionalen Garn-Prepregs A, hergestellt nach dem Verfahren nach Anspruch 1; und
eines 90°-unidirektionalen Garn-Prepregs B, in dem hochfeste Filamente F parallel zueinander in einer Richtung Y senkrecht zur axialen Richtung X der Wickelrolle angeordnet sind, um die die unidirektionalen Garn-Prepregs zu einer Thermokompressionsrolle 2 gewickelt sind; und
Durchführen einer thermischen Kompression darauf,
wobei das hochfeste Filament aus einer Gruppe ausgewählt ist, bestehend aus Aramidfilamenten und Kohlefaserfilamenten,
wobei die in dem Gewebe eingeschlossenen Schüsse eine Form aufweisen, in der die voneinander verschiedenen hochfesten Filamente abwechselnd angeordnet sind, und
wobei das thermoplastische Filmband eines ist, das aus einer Gruppe ausgewählt ist, bestehend aus einem Polypropylenfilmband, einem Polyethylenfilmband, einem Polyimidfilmband, einem Polyesterfilmband, einem Polyetheretherketon(PEEK)-Filmband und einem Polyurethanfilmband.

3. Verfahren nach Anspruch 2, wobei das 90°-unidirektionale Garn-Prepreg B durch ein Schärverfahren unter Verwendung einer Schärmaschine hergestellt wird.

## Revendications

1. Procédé de production d'un préimprégné de fil unidirectionnel à 0 °, dans lequel des filaments à haute résistance sont disposés parallèlement les uns aux autres dans une direction axiale X d'un rouleau d'enroulement autour duquel des préimprégnés de fil unidirectionnel sont enroulés et une résine est imprégnée, le procédé comprenant les étapes de :
(i) tissage d'un tissu à l'aide d'un ruban de film thermoplastique ayant une largeur de 5 à 60 mm comme chaîne et à l'aide de filaments à haute résistance comme trames ; et
(ii) de réalisation d'une compression thermique sur le tissu à une température à laquelle la chaîne est fondue,
le filament à haute résistance étant choisi parmi un groupe composé de filaments d'aramide et de filaments de fibres de carbone,
les trames incluses dans le tissu ayant une forme dans laquelle les filaments à haute résistance différents les uns des autres sont disposés en alternance, et
dans lequel le ruban de film thermoplastique est un ruban choisi dans un groupe constitué d'un ruban de film en polypropylène, d'un ruban de film en polyéthylène, d'un ruban de film en polyimide, d'un ruban de film en polyester, d'un ruban de film en polyétheréthercétone (PEEK) et d'un ruban de film en polyuréthane.

2. Procédé de production d'un matériau composite préimprégné multiaxial ayant une structure, dans lequel (i) deux ou plusieurs préimprégnés de fil unidirectionnel sont laminés, et (ii) un préimprégné de fil unidirectionnel de deux préimprégnés de fil unidirectionnel laminés adjacents l'un à l'autre comporte des filaments à haute résistance dont la direction d'orientation forme un angle d'inclinaison de 90 ° par rapport à la direction d'orientation des filaments à haute résistance inclus dans l'autre préimprégné de fil unidirectionnel, le procédé comprenant les étapes de :
fourniture simultanée et continue d'un préimprégné de fil unidirectionnel à 0 ° A produit par le procédé selon la revendication 1 ; et un préimprégné de fil unidirectionnel à 90 ° B dans lequel des filaments à haute résistance F sont disposés parallèlement les uns aux autres dans une direction Y perpendiculaire à la direction axiale X du rouleau d'enroulement autour duquel les préimprégnés de fil unidirectionnel sont enroulés sur un rouleau de compression thermique 2 ; et
de réalisation d'une compression thermique sur celui-ci, dans lequel le filament à haute résistance est choisi parmi un groupe composé de filaments d'aramide et de filaments de fibre de carbone,
les trames incluses dans le tissu ayant une forme dans laquelle les filaments à haute résistance différents les uns des autres sont disposés en alternance, et
dans lequel le ruban de film thermoplastique est un ruban choisi dans un groupe constitué d'un ruban de film en polypropylène, d'un ruban de film en polyéthylène, d'un ruban de film en polyimide, d'un ruban de film en polyester, d'un ruban de film en polyétheréthercétone (PEEK) et d'un ruban de film en polyuréthane.

3. Procédé selon la revendication 2, dans lequel le préimprégné de fil unidirectionnel à 90 ° B est préparé par un procédé d'ourdissage à l'aide d'une machine d'ourdissage.
